# EUROPÄISCHE PATENTSCHRIFT

(11) **EP 1 110 926 B1**
(45) Veröffentlichungstag und Bekanntmachung des Hinweises auf die Patenterteilung: **02.06.2004**
(21) Anmeldenummer: 00128269.8
(22) Anmeldetag: 22.12.2000
(51) Int. Cl.: C04B 41/63

(54) **Verfahren zur Oberflächenbehandlung von Bauteilen aus zementgebundenen Baustoffen**
Process for surface treatment of cement bonded building materials
Procédé de traitement de surface de matériaux de construction liés par du ciment

(30) Priorität: 24.12.1999 DE 19963137
(43) Veröffentlichungstag der Anmeldung: 27.06.2001
(73) Patentinhaber: Remei GmbH & Co. KG, 32825 Blomberg (DE)
(72) Erfinder: Töllner, Fritz, Dr., 31608 Marklohe (DE); Best, Walter, 32805 Horn-Bad Meinberg (DE)
(74) Vertreter: TER MEER STEINMEISTER & PARTNER GbR

(56) Entgegenhaltungen:
- EP-A- 0 894 780
- WO-A-90/10661
- DE-A- 3 445 922
- US-A- 4 999 216
- DATABASE EPODOC [Online] EUROPEAN PATENT OFFICE, THE HAGUE, NL; XP002162868 & KR 9 704 598 B (KOREA CHEMICAL CO) 29. März 1997 (1997-03-29)
- DATABASE WPI Week 198432 Derwent Publications Ltd., London, GB; AN 1984-198689 XP002162869 & JP 59 114504 A (NITTO ELECTRIC IND)
- DATABASE WPI Week 199707 Derwent Publications Ltd., London, GB; AN 1997-073217 XP002162870 & JP 08 319455 A (ASAHI GLASS CO)

## Beschreibung

Die Erfindung betrifft ein Verfahren zur Oberflächenbehandlung von Bauteilen aus zementgebundenen Baustoffen, insbesondere Beton, bei dem die Bauteile nach dem Pressen in einem Zwischenlager gelagert und anschließend verpackt oder anderweitig für die Auslieferung bereitgestellt werden.

Die U.S-A-4.999.216 beschreibt ein Verfahren zum Überziehen von Betonböden mit fotohärtbaren Überzügen. Die Fotohärtung soll verwendet werden, damit die Oberfläche rasch begehbar wird. Das Überzugsmaterial besteht beispielsweise aus 20 Gew. Tlen Vinyläther-Oligomer, einem Polyester aus zwei Monomeren in einer Menge von 22.8 Gew. Tlen sowie 4 % eines Fotoinitiators.

Bauteile aus zementgebundenen Baustoffen, beispielsweise Verbundpflastersteine oder Gehwegplatten aus Beton, sind zumeist einer mehr oder weniger starken Verschmutzung durch Fahrzeugverkehr, Witterungseinflüsse und dergleichen ausgesetzt. Aufgrund der porösen Struktur derartiger Bauteile dringt Schmutz aller Art in die Poren der Bauteile ein, so daß eine Reinigung von außen nicht möglich ist.

Es sind daher Verfahren zur Hydro- oder Oliophobierung der Oberfläche bekannt. durch die das Eindringen von Schmutz in die Poren der Bauteile weitgehend verhindert werden kann. Beispielsweise kann dies durch eine Oberflächenbehandlung der zu schützenden Oberfläche mit geeigneten Kunstharzen geschehen. Diese Substanzen benötigen jedoch eine Trocknungszeit von einigen Stunden bis hin zu einigen Tagen bis zur klebfreien Trocknung. Das bedeutet, daß die Bauteile aus dem laufenden Produktionsfluß herausgenommen und in einem weiteren Zwischenlager gelagert werden müssen. Da die Bauteile in diesem Stadium noch nicht gestapelt werden können, benötigen sie sehr viel Fläche. Der entsprechende Platz ist in den meisten Betrieben nicht vorhanden. Im übrigen ist die Notwendigkeit, die Bauteile aus dem Produktionsfluß herauszunehmen, äußerst nachteilig.

Die DE 40 03 909 A1 beschreibt ein Verfahren zur Verhinderung von Ausblüherscheinungen auf mineralischen Substraten, beispielsweise Betonteilen. Zu diesem Zweck werden wässrige Copolymerdispersionen verwendet, die zunächst getrocknet und sodann bei Bedarf mit ultraviolettem Licht bestrahlt werden. Da es sich um wässrige Systeme handelt, wird eine Trocknung in angemessen kurzer Zeit nicht ohne erhebliche Erwärmung möglich sein.

Angegeben werden hier Heizstrahler oder Wärmeluftwälzvorrichtungen mit Temperaturen von 20 bis 100°, vorzugsweise 50 bis 80 °C. Die UV-Bestrahlung soll beispielsweise für 10 Minuten mit einer 10-W-UV-Lampe erfolgen oder, alternativ, durch einfache Lagerung im Freien für zwei bis sieben Tage. Die Durchführung des Verfahrens ist also zeitraubend, so daß sich auch hier die zuvor geschilderten Probleme für den Produktionsfluß ergeben.

Zur Begrenzung der Betriebsfläche, zur Beschränkung der Kapitalbindung und im Interesse einer möglichst rationellen Arbeitsweise sind die meisten Herstellerbetriebe bemüht, ihre Produktion so einzustellen, daß die fertigen Bauteile möglichst unmittelbar nach der Fertigstellung ausgeliefert werden können. Eine längere Zwischenlagerung auf dem Betriebsgelände steht diesen Forderungen eindeutig entgegen.

Aufgabe der Erfindung ist es daher, ein Verfahren zur Oberflächenbehandlung von Bauteilen aus zementgebundenen Baustoffen zu schaffen, das in kürzester Zeit und insbesondere innerhalb des laufenden Produktionsflusses durchgeführt werden kann.

Diese Aufgabe wird bei einem Verfahren der obigen Art dadurch gelöst, daß nach der Entnahme aus dem Zwischenlager ein strahlenhärtbarer, wasser- und lösungsmittelfreier Lack der Zusammensetzung
mindestens 63 Gew.-% Pentaerythritol-triacrylat
22.5-27.5 Gew.-% N-Vinyl-2-pyrrolidon
4,3-5,3 Gew.-% Photoinitiator und
0.18-0.22 Gew.-% Netzmittel.
auf die zu behandelnde Oberfläche aufgebracht wird und daß diese Oberfläche anschließend einer Bestrahlung ausgesetzt wird.

Lacke, die unter dem Einfluß einer Bestrahlung, beispielsweise mit UV-Strahlen oder anderen kurzwelligen Lichtquellen mit Wellenlängen von 100 bis 380 nm rasch aushärten, sind an sich bekannt.

In Betracht kommt insbesondere ein Polyurethanacrylat oder ein substituiertes Triacrylat, das unter dem Einfluß von UV-Strahlen bereits nach einigen Sekunden bis 1 bis 2 Minuten bis zu klebfreier Oberfläche aushärtet, so daß die behandelten Bauteile unverzüglich aufgestapelt werden können, wie es etwa zur Verpackung auf Paletten notwendig ist. Die UV-Bestrahlung kann in Form von Blitzen oder auch als Dauerbestrahlung aufgebracht werden.

Das verwendete Behandlungsmittel wird im Interesse einer guten Verteilung vorzugsweise auf die Bauteile aufgesprüht, jedoch kann das Mittel auch aufgestrichen, aufgerakelt oder aufgewalzt werden.

Vorzugsweise werden die Bauteile vorab bei 40 bis 80°C gehalten, z.B. durch einen entsprechenden Wärmetunnel geführt, in dem es zu einer Vorvernetzung des strahlenhärtenden Mediums kommt. Anschließend erfolgt dann beispielsweise die UV-Bestrahlung in Form UV-Blitzen oder auch kontinuierlicher Bestrahlung.

Als Bestandteile des Lackes kommen auch Polyesterharze mit Styrol als Reaktionspartner in Betracht Ferner verwendbar sind beispielsweise Epoxiacrylat, Phenolharzderivate, Paraffine, Melaminharzderivate, aliphatische Acrylate, PE-Acrylate, acryliertes Sojaöl. Polyesteracrylat, Silikonacrylat, Phenoxyethylacrylat, usw..

Der erfindungsgemäße Lack weist, wie erwähnt, folgende Zusammensetzung auf:
mindestens 63 Gew.-% Pentaerythritol-triacrylat
22,5-27,5 Gew.-% N-Vinyl-2-pyrrolidon
4,3-5,3 Gew.-% Photoinitiator und
0,18-0,22 Gew.-% Netzmittel.

Dieser Lack läßt sich in einem einfachen Standard-Rührverfahren bei Raumtemperatur herstellen und besitzt eine dynamische Viskosität von 0,028 N s m⁻². Er zeichnet sich durch gute Verarbeitungseigenschaften aus und läßt sich mit den üblichen Auftragsverfahren, die bei herkömmlichen Lacken auf Melaminharz-Basis eingesetzt werden, in Form eines dünnen Filmes mit einer Dicke von beispielsweise 3-7 µm auf die zu beschichtenden Oberflächen aufbringen. Bei der Verarbeitung dieses Lackes ist somit auf Seiten des Anwenders keine Umrüstung der bestehenden Anlagen erforderlich. Eine Vedünnung des Lackes durch Monomerzusätze ist möglich.

Der Lackfilm läßt sich durch anschließende Bestrahlung, beispielsweise mit Ultraviolettstrahlung oder Elektronenstrahlen bei Raumtemperatur aushärten und hat somit den Vorteil, daß bei dem Härtungsprozeß keine zusätzliche Erwärmung erforderlich ist.

Man erhält auf diese Weise eine hochglänzende oder mattierte Lackschicht mit einem Glanzgrad von 97.6 %, die zu 100 % aus Feststoffen besteht und sich durch eine sehr hohe Härte und eine entsprechende Kratzfestigkeit auszeichnet. Die Lackschicht ist durchsichtig, so daß sie auch zur Beschichtung von transparenten Materialien wie Kunststoff-Brillengläsern geeignet ist.

Im folgenden wird ein bevorzugtes Ausführungsbeispiel näher beschrieben.

Der Lack besteht in der bevorzugten Ausführungsform aus 70,0 Gewichtsprozent Pentaerythritol-triacrylat. 25,0 Gewichtsprozent N-Vinyl-2-pyrrolidon, 4,8 Gewichtsprozent 1-Hydroxy-cyclohexyl-phenyl-keton als Photoinitiator und 0,2 Gewichtsprozent eines nicht-ionogenen fluorierten Alkylesters als Netzmittel. Die Mengenangaben beziehen sich auf die unverdünnte Grundsubstanz. Ein bevorzugter Photoinitiator ist "IR-GACURE 140", und als Netzmittel wird bevorzugt "FLUORAT FC 430" eingesetzt.

Die Herstellung des Lackes erfolgt bei Raumtemperatur in einem Rührbehälter. der zunächst die gewünschte Menge an Pentaerythritol-triacrylat enthält, dem dann die übrigen Bestandteile der Reihe nach in der oben angegebenen Reihenfolge unter ständigem Rühren zugegeben werden.

### Beispiel 1:

Auf Gehwegplatten aus Beton wird nach dem Pressen und der Zwischenlagerung ein Lack mit der Zusammensetzung gemäß Anspruch 1 aufgebracht, das als Lack auf die zu schützende Oberfläche aufgesprüht wird. Anschließend erfolgt eine Bestrahlung mit 3 bis 5 Blitzen aus UV-Licht. Die behandelte Oberfläche ist abriebfest, chemikalien beständig und vergilbt oder verbleicht nicht.

### Beispiel 2:

Die Verfahrensweise entspricht Beispiel 1, jedoch werden die Gehwegplatten nach dem Auftragen des Lackes und vor der Bestrahlung mit UV-Strahlen in einem Wärmetunnel einer Wärmebehandlung von 40 bis 80°C ausgesetzt. Hier findet eine Vorvernetzung des Polyurethanacrylats statt. Diese Vorvernetzung kann die Aushärtung beschleunigen.

## Patentansprüche

1. Verfahren zur Oberflächenbehandlung von Bauteilen aus zementgebundenen Baustoffen, insbesondere Beton, bei dem die Bauteile nach dem Pressen in einem Zwischenlager gelagert und anschließend verpackt oder anderweitig für die Auslieferung bereitgestellt werden, **dadurch gekennzeichnet, daß** nach der Entnahme aus dem Zwischenlager ein strahlenhärtbarer, wasser- und lösungsmittelfreier Lack der Zusammensetzung
mindenstens 63 Gew.-% Pentaerythritol-triacrylat
22,5-27.5 Gew.-% N-Vinyl-2-pyrrolidon
4.3-5.3 Gew.-% Photoinitiator und
0,18-0,22 Gew.-% Netzmittel.
auf die zu behandelnde Oberfläche aufgebracht wird und daß diese Oberfläche anschließend einer Bestrahlung ausgesetzt wird.

2. Verfahren nach Anspruch 1, **dadurch gekennzeichnet, daß** der Lack ein Polyurethanacrylat enthält.

3. Verfahren nach Anspruch 1, **dadurch gekennzeichnet, daß** der Lack ein substituiertes Triacrylat ist.

4. Verfahren nach Anspruch 1, **dadurch gekennzeichnet, daß** der Lack ein Polyesterharz mit Styrol als Reaktionspartner enthält.

5. Verfahren nach Anspruch 1, **dadurch gekennzeichnet, daß** der Lack ein Epoxiacrylat, Phenolharzderivat, Paraffin, Melaminharzderivat, aliphatisches Acrylat, PE-Acrylat, acryliertes Sojaöl, Polyesteracrylat, Silikonacrylat oder Phenoxyethylacrylat enthält.

6. Verfahren nach Anspruch 5, **dadurch gekennzeichnet, daß** der Lack folgende Zusammensetzung aufweist:
70.0 Gew.-% Pentaerythritol-triacrylat
25,0 Gew.-% N-Vinyl-2-pyrrolidon
4,8 Gew.-% Photoinitiator und
0.2 Gew.-% Netzmittel.

7. Verfahren nach Anspruch 5 oder 6, **dadurch gekennzeichnet, daß** der Lack aus 1-Hydroxy-cyclohexyl-phenyl-keton als Photoinitiator besteht.

8. Verfahren nach einem der Ansprüche 5 bis 7, **dadurch gekennzeichnet. daß** das Netzmittel ein nicht-ionogener Alkylester ist.

9. Verfahren nach einem der Ansprüche 1 bis 8, **dadurch gekennzeichnet. daß** die Bestrahlung mit UV-Licht oder einem anderen kurzwelligen Licht mit Wellenlängen von 100 bis 380 nm erfolgt.

10. Verfahren nach Anspruch 1 und 9, **dadurch gekennzeichnet, daß** das Behandlungsmittel auf zu die schützende Oberfläche aufgesprüht wird.

11. Verfahren nach einem der Ansprüche 1 bis 10, **dadurch gekennzeichnet, daß** das Behandlungsmittel auf die zu schützende Oberfläche aufgerakelt, aufgewalzt oder aufgestrichen wird.

12. Verfahren nach einem der Ansprüche 1 bis 11. **dadurch gekennzeichnet, daß** die Bauteile vor der Bestrahlung auf 40 bis 80°C erwärmt werden.

## Claims

1. Process for the surface treatment of building components composed of cement-bonded building materials, especially concrete, in which process the building components are stored in an intermediate store after being pressed and are subsequently packed or otherwise prepared for delivery, **characterised in that**, after removal from the intermediate store, a radiation-hardenable, water- and solvent-free lacquer having the composition
at least 63% by weight of pentaerythritol triacrylate
22.5-27.5% by weight of N-vinyl-2-pyrrolidone
4.3-5.3% by weight of photoinitiator and
0.18-0.22% by weight of wetting agent
is applied to the surface to be treated and **in that** this surface is subsequently subjected to irradiation.

2. Process according to claim 1, **characterised in that** the lacquer contains a polyurethane acrylate.

3. Process according to claim 1, **characterised in that** the lacquer is a substituted triacrylate.

4. Process according to claim 1, **characterised in that** the lacquer contains a polyester resin with styrene as the co-reactant.

5. Process according to claim 1, **characterised in that** the lacquer contains an epoxy acrylate, phenol resin derivative, paraffin, melamine resin derivative, aliphatic acrylate, PE acrylate, acrylated soya oil, polyester acrylate, silicone acrylate or phenoxyethyl acrylate.

6. Process according to claim 5, **characterised in that** the lacquer has the following composition:
70.0% by weight of pentaerythritol triacrylate
25.0% by weight of N-vinyl-2-pyrrolidone
4.8% by weight of photoinitiator and
0.2% by weight of wetting agent.

7. Process according to claim 5 or 6, **characterised in that** the lacquer comprises 1-hydroxy cyclohexyl phenyl ketone as the photoinitiator.

8. Process according to any one of claims 5 to 7, **characterised in that** the wetting agent is a non-ionic alkyl ester.

9. Process according to any one of claims 1 to 8, **characterised in that** the irradiation is effected with UV light or another short-wave light having wavelengths of from 100 to 380 nm.

10. Process according to claims 1 and 9, **characterised in that** the treatment agent is sprayed onto the surface to be protected.

11. Process according to any one of claims 1 to 10, **characterised in that** the treatment agent is doctored, rolled or spread onto the surface to be protected.

12. Process according to any one of claims 1 to 11, **characterised in that**, prior to irradiation, the building components are heated to from 40 to 80°C.

## Revendications

1. Procédé de traitement de surface d'éléments préfabriqués en matériaux de construction liés par du ciment, en particulier du béton, dans lequel les éléments préfabriqués sont, après compression, entreposés dans une réserve intermédiaire puis emballés ou mis à disposition d'une autre manière pour la livraison, **caractérisé en ce qu'**après le prélèvement dans la réserve, une peinture radiodurcissable, sans eau et sans solvant, d'une composition correspondant à
au moins 63 % en poids de triacrylate de pentaérythritol,
22,5 - 27,5 % en poids de N-vinyle-2-pyrrolidone,
4,3 - 5,3 % en poids de photo-initiateur et de
0,18 - 0,22 % en poids d'agent mouillant,
est déposée sur la surface à traiter et que cette surface est ensuite exposée à une irradiation.

2. Procédé selon la revendication 1, **caractérisé en ce que** la peinture contient un acrylate de polyuréthane.

3. Procédé selon la revendication 1, **caractérisé en ce que** la peinture est un triacrylate substitué.

4. Procédé selon la revendication 1, **caractérisé en ce que** la peinture contient une résine de polyester avec du styrène, à titre de co-réactif.

5. Procédé selon la revendication 1, **caractérisé en ce que** la peinture contient une résine époxy acrylate, un dérivé de résine phénolique, de la paraffine, un dérivé de résine de mélamine, de l'acrylate aliphatique, de l'acrylate de polyéthylène, de l'huile de soja acryloylée, de l'acrylate de polyester, de l'acrylate de silicone ou de l'acrylate de phénoxyéthyle.

6. Procédé selon la revendication 5, **caractérisé en ce que** la peinture présente la composition suivante :
70,0 % en poids de triacrylate de pentaérythritol,
25,0 % en poids de N-vinyle-2-pyrrolidone,
4,8 % en poids de photo-initiateur et
0,2 % en poids d'agent mouillant.

7. Procédé selon la revendication 5 ou 6, **caractérisé en ce que** la peinture comprend du 1-hydroxy-cyclohexyle-phényle-cétone, à titre de photo-initiateur.

8. Procédé selon l'une des revendications 5 à 7, **caractérisé en ce que** l'agent mouillant est un ester d'alkyle non ionogène.

9. Procédé selon l'une des revendications 1 à 8, **caractérisé en ce que** l'irradiation s'opère à la lumière ultraviolette ou à une autre lumière à onde courte, avec des longueurs d'onde de 100 à 380 nm.

10. Procédé selon la revendication 1 et 9, **caractérisé en ce que** le moyen de traitement est pulvérisé sur la surface à protéger.

11. Procédé selon l'une des revendications 1 à 10, **caractérisé en ce que** le moyen de traitement est raclé, laminé ou enduit sur la surface à protéger.

12. Procédé selon l'une des revendications 1 à 11, **caractérisé en ce que** les éléments préfabriqués sont chauffés de 40 à 80° C, avant irradiation.
